# EUROPEAN PATENT APPLICATION

(11) **EP 3 493 144 A1**
(43) Date of publication of application: **05.06.2019**
(21) Application number: 17382824.5
(22) Date of filing: 01.12.2017
(51) Int. Cl.: G06Q 50/06, G06Q 10/06, G06Q 10/04, H02J 3/00

(54) **A METHOD, A SYSTEM AND COMPUTER PROGRAMS, FOR ELECTRICAL ENERGY DISTRIBUTION IN A PEER-TO-PEER DISTRIBUTED ENERGY NETWORK**

(71) Applicant: Telefonica Innovacion Alpha S.L, 28013 Madrid (ES)
(72) Inventor: Phoel, Wayne, 28013 Madrid (ES); Pilaszanovich, Jakab, 28013 Madrid (ES); Stalling, Lars, 28013 Madrid (ES); le Bienvenu, Chantal, 28013 Madrid (ES); Vilar, Inês, 28013 Madrid (ES); Foster, John, 28013 Madrid (ES)
(74) Representative: Carlos Hernando, Borja

(57) **Abstract**

The method comprises receiving, by an energy controller (100) located in a site remote from a plurality of nodes, from each partner node (200) that request to be part of a distribution of electrical energy within a network, a list including a predicted energy generation, storage and demand over a period of time, actual price for supplying and/or demanding energy, including prices to traverse an intermediary node, and energy losses that would be incurred in transferring energy to/from each partner node (200), including losses to traverse an intermediary node; and calculating, by the energy controller (100), the distribution of the energy using the information of said lists and a predefined function including maximizing a ratio of energy distributed to cost, allocating energy resources in a balanced manner based on needs of different partner nodes (200) or a combination of cost and equity.

## Description

### Field of the invention

The present invention generally relates to distributed energy networks. In particular, present invention relates to a method, to a system and to computer programs, for electrical energy distribution in a peer-to-peer distributed energy network, in which several nodes are connected and contain one or more devices including electrical energy generation elements, electrical energy storage elements and/or electrical energy loads.

Present invention enables different nodes to agree upon prices for trading electrical energy and transporting it over the energy network. Depending on the network topology, devices at each node, and preferences of the users (including options such as future reservations) the coordinating function, implemented remotely from the nodes, finds and implements the best solution for all participants.

### Background of the invention

Future energy systems will rely increasingly on distributed electricity generation. Conventional centralized billing systems are inefficient for configurations in which the infrastructure is owned by the users themselves, who invest in upgrades and maintenance. A distributed, peer-to-peer payments methodology is needed to match the distributed nature of the energy network. Such a payment system will enable users to recover their costs, make a profit, and incentivize additional investments.
Document [1] 'Optimal scheduling of microgrid operation considering the time-of-use price of electricity' Mishel Mahmoodi et al. IECON 2013 - 39th Annual Conference of the IEEE Industrial Electronics Society, discusses price-based trading between a microgrid and the conventional utility-run electric grid; it accounts for generation, storage, and loads in the microgrid and addresses the relative costs of local generation and grid-provided electricity for charging batteries.
Document [2] 'Optimal scheduling of distributed energy resources in energy market' Srinka Basu et al. 2015 Annual IEEE India Conference (INDICON), considers a double auction for electricity prices between users and producers, which include both distributed renewables in the microgrid and the utility-run conventional power grid; includes priorities for loads: low priority loads are generally schedulable loads while the high priority load demands are non-schedulable and have to be met all the time.
Document [3] 'Cooperative distributed energy scheduling for smart homes applying stochastic model predictive control' Mehdi Rahmani-andebili et al. 2017 IEEE International Conference on Communications (ICC), discloses a cooperative distributed energy scheduling approach to solve this problem for a set of the smart homes (SHs). In this method, every SH takes into account its available energy resources such as DG, PV panels, and battery of plug- in electric vehicle (PEV), collects the information of the available energy of the connected SHs and their proposed prices, and conducts the energy scheduling in a cooperative distributed way.
   It is assumed that every SH can exchange the information just with its connected SHs. At every time step, in parallel to other SHs, every SH randomly selects its counterpart (one of the connected SHs), and solves its own energy scheduling problem considering the received information from the selected cooperator. Then, every SH randomly changes its cooperator and share the updated information with one another. This process is repeated several times until no significant improvement is observed in the value of the objective function of each SH.
   Unlike present invention, the system disclosed in [3] does not consider losses. There is no prioritization of loads or adapting schedules of loads according to pricing. The problem formulation assumes access to a conventional electrical grid. The only storage considered is a plug-in electric vehicle that can be unplugged and driven. The document does attempt to account for effects of reduced life by cycling batteries.
Document [4] 'The role of energy storage in local energy markets' Esther Mengelkamp et al. Published in European Energy Market (EEM), 2017 14th International Conference, offers a decentralized marketplace for procuring electricity directly from local renewable generation. They evaluate the market efficiency in terms of the attained rate of self-consumption and the average electricity price depending on the number of potential trading partners in two scenarios: A local market without energy storage and a local market with a community energy storage. The results indicate that a community energy storage can substantially increase the market's efficiency. This system is focused on separate users and generators.
Document [5] 'Trading on local energy markets: A comparison of market designs and bidding strategies' Esther Mengelkamp et al. Published in: European Energy Market (EEM), 2017 14th International Conference, introduces a local market which allows prosumers and consumers (in short: agents) to trade electricity directly within their community at variable prices. The market aims at facilitating a local balance of energy supply and demand. They present and compare two market designs, a direct peer-to-peer (P2P) market and a centralized order book market, with the objective of assessing which design is best suited for a local electricity market.

In every time slot, each buying consumer is randomly paired with selling prosumers in an iterative fashion until she has procured all of her electricity or has been paired with all potential sellers.

Besides, European patent EP-B1-2430723 addresses trading between nodes and discusses routing and forwarding of what they call energy packets. An end-to-end route through the networks is determined and a specific amount of electricity is contracted to flow over that route. This patent requires energy to be "packetized." There is an example of scheduling use of a laundry machine, but it is limited to specifying a later time when energy is expected to be lower cost. The energy transaction is scheduled for the later time and the laundry is powered when that energy arrives. The mechanism for agreeing upon a price for energy is not considered.

The prior art on setting pricing for renewable energy systems predominantly focuses on selling energy from users back to the grid, and not to each other. Of those that do consider users selling to each other, often the grid exists as a main source of backup (as well as an anchor for pricing). Those that consider systems completely disconnected from the grid, typically, set up conventional microgrids where generation is separate from users and not peer-to-peer.

Moreover, none of these existing or proposed solutions address the real problems of trading energy in developing regions, where infrastructure costs are borne directly by the users themselves, who do not have sufficient savings or income to afford significant upfront investment, and energy demand often outstrips its supply. The problem requires new concepts to be applied such as multiple priority levels, different levels of service, and corresponding pricing. Also, for an approach to apply to different developing communities in different culture, the way in which the system's objectives are defined must be flexible and adaptable to reflect the differing values of each community.

### Description of the Invention

Embodiments of the present invention provide according to an aspect a method for electrical energy distribution in a peer-to-peer distributed energy network, said energy network being adapted for the transport of electrical energy and comprising a plurality of nodes (e.g. homes or other entities), each node comprising one or more devices including electrical energy generation elements, electrical energy storage elements and/or electrical energy loads.

In the proposed method, an energy controller located remotely from the plurality of nodes, receives a list from each node of the plurality of nodes that request to be part of the distribution of electrical energy within the energy network (from now on termed partner nodes) including the following information:
- a predicted energy generation, storage and demand over a specified period of time,
- an actual price (i.e. economic cost at a given period of time) for supplying and/or demanding electrical energy, including prices to traverse an intermediary node between two partner nodes, and
- electrical energy losses that would be incurred in transferring electrical energy to or from each partner node, including losses to traverse an intermediary node between two partner nodes,
and calculates the distribution of the electrical energy using the information of the received lists and a predefined function.

According to the proposed method, said predefined function may include maximizing a ratio of electrical energy distributed to cost, allocating energy resources in a balanced manner (i.e. fairly/impartially) based on needs of different partner nodes or a combination of cost and equity/fairness.

The partner nodes can be directly or indirectly connected with the other partner nodes.

In an embodiment, the energy controller performs said calculation online, i.e. in real-time.

In the proposed method, preferably, said lists are updated whenever an actual supply or demand differs from what was predicted. That is, the nodes transmit updated information to the energy controller if the information the nodes predicted and/or the prices for supplying and/or demanding electrical energy have/has changed.

In an embodiment, the distribution of electrical energy is calculated by considering that all partner nodes pay and/or get the same price for demanding and/or supplying the electrical energy. Alternatively, in another embodiment, the distribution of electrical energy is calculated by considering that some of the partner nodes pay and/or get a price different to other partner nodes for demanding and/or supplying the electrical energy.

In yet another embodiment, the distribution of electrical energy is further calculated using at least one algorithmic function to achieve equality of distribution within the energy network, for instance, in accordance with an embodiment, the algorithmic function may include equalizing storage levels between a sending node and a receiving node(s). In accordance with another embodiment the algorithmic function may include setting a minimum storage level that must be kept at any node.

In an embodiment, the energy controller further provides scheduling information indicating the partner nodes at what specific period of time to perform the electrical energy distribution. Moreover, the scheduling information may also indicate an amount of electrical energy to be distributed and/or a specific period of time at which to stop the electrical energy distribution. Even, the scheduling information may also indicate a source of the electrical energy and/or a destination of the electrical energy.

The scheduling information can be transmitted to all the partner nodes at a same time. In this case, it is the full schedule for all partner nodes that must be sent out. Alternatively, the scheduling information can be transmitted, individually, to each partner node. In this last case, the schedule sent to a particular partner node need only be the part of the total schedule that affects that partner node.

In an embodiment, the energy generation, storage and demand is predicted by the partner node(s) reserving a given amount of electrical energy for a future period, or alternatively, by pre-caching a given amount of electrical energy.

Embodiments of the present invention also provide according to another aspect a system configured to perform the method embodiment steps and operations summarized above and disclosed in detail below.

In particular, the proposed system for electrical energy distribution in a peer-to-peer distributed energy network includes a plurality of nodes, each one comprising one or more devices including electrical energy generation elements, electrical energy storage elements and/or electrical energy loads, and an energy controller located remote from the nodes of the energy network. The energy controller is configured and adapted to receive a list from each node of the plurality of nodes that request to be part of the distribution of electrical energy within the energy network (termed partner nodes) and to calculate the distribution of the electrical energy using information of said lists and a predefined function, wherein said predefined function may include maximizing a ratio of electrical energy distributed to cost, allocating energy resources in a balanced manner based on needs of different partner nodes or a combination of cost and equity.

According to the proposed system said list includes the following information: a predicted energy generation, storage and demand over a specified period of time; an actual price for supplying and/or demanding electrical energy, including prices to traverse an intermediary node between two partner nodes; and electrical energy losses that would be incurred in transferring electrical energy to or from each partner node, including losses to traverse an intermediary node between two partner nodes.

In the proposed system, the partner nodes are directly or indirectly connected with the other partner nodes and with the controller node.

According to the proposed system, the electrical energy generation elements may include solar panels, diesel generation systems, geothermal systems or a human-powered crank generator, among others. The energy storage elements may include batteries, capacitors and/or elevated weight including water, among others. Finally, the electrical energy loads may include lighting systems and/or appliances including kitchen appliances, televisions, radios, refrigerators and/or heating equipment, among others.

Other embodiments of the invention that are disclosed herein also include software programs to perform the method embodiment steps. More particularly, a computer program product is one embodiment that has a computer-readable medium including computer program instructions encoded thereon that when executed on at least one processor in a computer system causes the processor to perform the operations indicated herein as embodiments of the invention.

Present invention provides a flexible and adaptable solution to meet the values of the community in which it is deployed, whether it be setting a single price for all nodes, to enabling each node to set his/her own price. It also includes a way to enforce equity/fairness in distribution and in prices.

### Brief Description of the Drawings

The previous and other advantages and features will be more fully understood from the following detailed description of embodiments, with reference to the attached drawings, which must be considered in an illustrative and non-limiting manner, in which:
Fig. 1 is a schematic illustration of the proposed system and interactions between the partner nodes and energy controller for electrical energy distribution in a peer-to-peer distributed energy network.
Fig. 2 schematically illustrates an example of the partner nodes connections.
Fig. 3 schematically illustrates an embodiment of the present invention in which the energy controller sets a general price for all the partner nodes.

### Detailed Description of the Invention and of Preferred Embodiments

Present invention provides a method and a corresponding system for electrical energy distribution in a peer-to-peer distributed energy network. In particular, present invention considers the case in which a group of homes or other entities (hereafter referred as nodes) may contain one or more devices including a combination of some or all of the following: electrical energy generation elements (e.g. solar panels, diesel generation, geothermal, human-powered crank), electrical energy storage elements (e.g. batteries, capacitors, elevated weight such as water) and electrical energy loads (e.g., lights, refrigerators, heating equipment, home appliances). In addition, these nodes are connected through an energy network capable of transporting energy.

Present invention uses an energy controller 100, which can be implemented using hardware, software or combinations thereof, and that includes processing means, among other components, which is located in a remote site (e.g. the offices of an energy service provider, among others). The energy controller 100 is responsible of calculating the distribution of the electrical energy within the energy network and between the nodes that want to be part of said distribution (hereafter referred as partner nodes 200). The energy controller 100 may optimize energy distribution and the prices involved for buying, selling and distributing energy according to predicted and actual supply and/or demand. The means for optimizing distribution and also price is based on a specified, but changeable, predefined function.

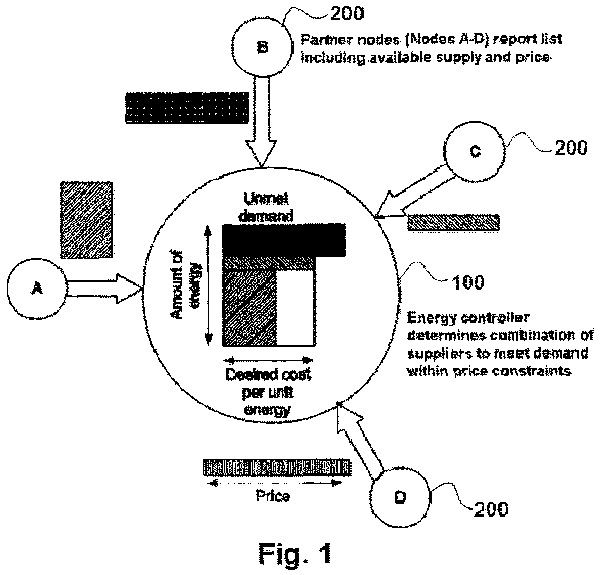

To that end, the energy controller 100 receives (see Fig. 1) from each of the partner nodes 200 a list including:
- a predicted energy generation, storage and demand over a specified period of time;
- an actual price for supplying and/or demanding electrical energy, including prices to traverse an intermediary node between two partner nodes 200; and
- electrical energy losses that would be incurred in transferring electrical energy to or from each partner node 200, including losses to traverse an intermediary node between two partner nodes 200.

The energy controller 100 then calculates the best distribution of electrical energy based on the information of the lists and the mentioned predefined function. The predefined function could take several forms, including but not limited to maximizing a ratio of electrical energy distributed to cost, allocating energy resources in a balanced manner based on needs of different partner nodes or a combination of cost and equity.

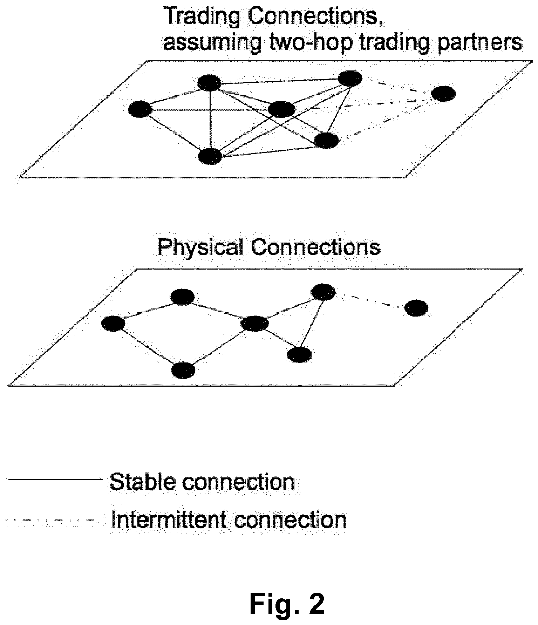

The partner nodes 200 must be connected at some point through the energy network. They do not need to be connected directly to each other but may rely on other nodes in the energy network as intermediaries for pass-through of electrical energy. They may also connect to the energy network for the sole purpose of executing a transaction and then disconnect from the energy network. They may also connect to the energy network in order to create a contract for a transaction and then disconnect until the time to execute the transaction. Fig. 2 illustrates the relationship between the physical network and the trading network when partner nodes 200 are limited to within two hops of each other. Although two partner nodes 200 may not be directly connected on the trading graph, it does not mean that electrical energy cannot flow from one to the other. Such a transfer can occur through two transactions over the energy network.

The energy controller 100 may operate on multiple timescales. For example, it may contract for future access to electrical energy at a potentially reduced price, where the future could be several hours or even days away. Typically, the contracted amounts are rough approximations in time and volume of electrical energy. Such future reservations may be designed to allow a certain amount of surplus, unreserved electrical energy to account for errors in predictions. Such a contract may be modified up until the transaction occurs, potentially with modified costs as well. Many forms of electrical energy use are either unpredictable or imprecise in their predictability. As a result, the energy controller 100 may perform real-time optimizations as exact supply and demand values become known.

Electrical energy storage elements are a special component of the system as they can act as both sources and destinations of electrical energy, and also serve as a buffer to accommodate mismatches in the temporal availability and demand of electrical energy, as well as errors in predicted and contracted amounts relative to actual, real-time demand.

The price preferences accepted by the energy controller 100 can be set by the system, community, or individual partner nodes 200. They enable partner nodes 200 who have equipment for providing electrical energy (which can include acting as a pass-through node who has neither generation nor storage capability but is in between a source and destination) to others to set the price they charge based on their individual expenses such as equipment purchases, timeframe for paying off any loans, operation and maintenance costs, as well as desired profit. Similarly, partner nodes 200 may set the prices they are willing to pay, potentially for different levels of service (i.e., they may be willing to pay a small amount for low-power, intermittent service, and pay more for more reliable service). Note that a partner node 200 that has both generation capabilities and loads may set a higher price for selling electrical energy than for how much that partner node sets for buying electricity. In that case, the energy controller 100 will not satisfy that partner node 200 demand from its own supply.

The distribution of electrical energy may also involve a schedule for transactions. Given the predictions for availability and demand from all partner nodes 200, several approaches are feasible (and which to use depends on the specific priorities and utility function). A partner node 200 may reserve electrical energy to be transferred later if determined that that electrical energy will be available when needed. Alternatively, a partner node 200 may "pre-cache" electrical energy if it is available now but needed later, delivering low power over an extended period of time. This period can be hours, if not days. In many cases, the pre-caching will charge batteries or other storage technologies, including inertia-driven storage units. Losses are optimized in a low charging mode and are used to determine adequate levels. If and when losses surpass a predetermined threshold, the pre-caching event or procedure can be stopped. Alternatively, the energy controller 100 may execute a hybrid of these approaches, in which the electrical energy transfer is spread out over time, not necessarily evenly, using a combination of local storage and remote generation to meet the appliance needs. Note also that these schedules can involve multiple sources to meet the demands.

The energy controller 100 will also identify moments of least demand, and those of least traffic in the energy network. These moments will be used to arrange and carry out the self-healing function of the energy network. Ideally, any shifting of electrical energy will take place when the cost for transferring electrical energy at its lowest levels, where "cost" can take on monetary or other forms as discussed elsewhere.

Note a particular link may end up on two paths for two different simultaneous electrical energy transfers. If the two transfers are in opposite directions, only the difference need be sent over the link--the remainder can be handled through bookkeeping in order to avoid losses.

Once a schedule has been determined, that schedule is sent to the appropriate partner nodes 200 in the energy network. The information may be sent in a broadcast in which all partner nodes 200 in the energy network receive the full schedule. Alternatively, the energy controller 100 may send individual messages to each affected partner node 200, where the message contains only the schedule information relevant to that partner node 200. The schedule can be updated at any time up until the time the electrical energy is scheduled to be transferred, provided that there is sufficient time before a transaction is scheduled to ensure that all partner nodes 200 involved in the transaction receive the update. The schedule may include some margin for error to allow for short-term variations from what was predicted.

Following, two distinct embodiments of functions, or tasks, which can be implemented by the energy controller 100, are described.

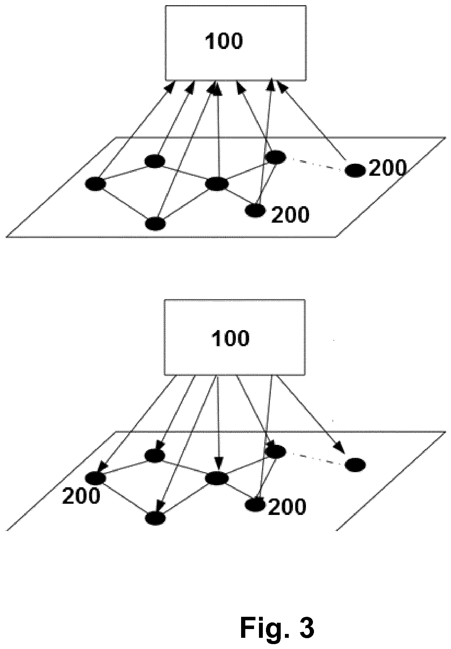

Fig. 3 illustrates a first embodiment in which the energy controller 100 sets a general price for the electrical energy. In this scenario, the energy controller 100 defines that all partner nodes 200 pay the same price per unit of electrical energy (or, alternatively, a fixed number of service levels are specified, each with its own price, again the same for all partner nodes 200). A supplier of electrical energy receives a pre-defined amount per unit electrical energy supplied, and intermediaries receive a pre-defined amount per unit electrical energy forwarded. Partner nodes 200 may still enter their preferred cost for the energy controller 100 to use to calculate the price for each service level. Prices may still fluctuate over time and as predictions of supply and demand change in the energy network. Such a configuration may include algorithmic components to achieve equality of distribution, such as equalizing storage levels across the energy network, or setting service levels to ensure all partner nodes 200 have access to some minimal energy, among other possible strategies.

The energy controller 100 may also provide detailed schedule information declaring when partner nodes 200 that trade electrical energy will transmit that electrical energy over the connections, including details such as start time, amount to be transferred, and stop time for each set of nodes involved in a transaction. In addition, that information may also include the source device (e.g. specific generator or storage) and/or the destination device (e.g. appliance or storage), if known and appropriate.

In a second embodiment, the energy controller 100 sets variable prices for each of the partner nodes 200. The energy controller 100 calculates the optimum prices and transactions among the partner nodes 200 according to the defined optimization criteria and communicates the prices to all partner nodes 200 involved in transactions. The energy controller 100 may also provide detailed schedule information declaring when partner nodes 200 that trade energy will transmit that electrical energy over the connections, including details such as start time, amount, and stop time for each set of partner nodes 200 involved in a transaction. Besides, that information may also include the source device (e.g. specific generator or storage) and/or the destination device (e.g. appliance or storage), if known and appropriate.

While the foregoing is directed to embodiments of the present invention, other and further embodiments of the invention may be devised without departing from the basic scope thereof. For example, other aspects may be implemented in hardware or software or in a combination of hardware and software. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is determined by the claims that follow.

## Claims

1. A method for electrical energy distribution in a peer-to-peer distributed energy network, said energy network being adapted for the transport of electrical energy and comprising a plurality of connected nodes, each node comprising one or more devices including electrical energy generation elements, electrical energy storage elements and/or electrical energy loads, the method comprising:
receiving, by an energy controller (100) located in a site remote from the plurality of nodes, a list from each node of the plurality of nodes that request to be part of said distribution of electrical energy within the energy network, termed partner nodes (200), wherein said list includes the following information:
- a predicted energy generation, storage and demand over a specified period of time,
- an actual price for supplying and/or demanding electrical energy, including prices to traverse an intermediary node between two partner nodes, and
- electrical energy losses that would be incurred in transferring electrical energy to or from each partner node, including losses to traverse an intermediary node between two partner nodes; and
calculating, by the energy controller (100), the distribution of the electrical energy using the information of said lists and a predefined function, wherein said predefined function includes maximizing a ratio of electrical energy distributed to cost, allocating energy resources in a balanced manner based on needs of different partner nodes or a combination of cost and equity,
wherein the partner nodes (200) being directly or indirectly connected with the other partner nodes (200).

2. The method of claim 1, wherein the list from each partner node (200) being received whenever an actual supply or demand in the node differs from what was predicted.

3. The method of claim 1, wherein the distribution of electrical energy being calculated by considering that some of the partner nodes (200) pay and/or get a price different to other partner nodes (200) for demanding and/or supplying the electrical energy, or by considering that all of the partner nodes (200) pay and/or get a same price.

4. The method of previous claims, wherein the distribution of electrical energy being further calculated using at least one algorithmic function to achieve equality of distribution within the energy network.

5. The method of claim 4, wherein said algorithmic function includes equalizing storage levels between a sending node and a receiving node(s).

6. The method of claim 4, wherein the algorithmic function includes setting a minimum storage level that must be kept at any node.

7. The method of claim 1, further comprising providing, by the energy controller (100), scheduling information indicating the partner nodes (200) at what specific period of time to perform the electrical energy distribution.

8. The method of claim 7, wherein said scheduling information further indicates an amount of electrical energy to be distributed.

9. The method of claim 8, further comprising indicating a specific period of time at which to stop the electrical energy distribution.

10. The method of claim 8, wherein the scheduling information further indicates a source of the electrical energy and/or a destination of the electrical energy.

11. The method of any of claims 7 to 10, wherein the scheduling information being transmitted to all the partner nodes (200) at a same time or the scheduling information being transmitted, individually, to each partner node (200).

12. The method of claim 1, wherein the energy generation, storage and demand being predicted by the partner node(s) (200) reserving a given amount of electrical energy for a future period, or by pre-caching a given amount of electrical energy.

13. A system for electrical energy distribution in a peer-to-peer distributed energy network, said system comprising:
a plurality of connected nodes of an energy network, wherein said energy network being configured and adapted for the transport of electrical energy and wherein each of said plurality of nodes comprising one or more devices including electrical energy generation elements, electrical energy storage elements and/or electrical energy loads; and
an energy controller (100) located in a site remote from the plurality of nodes and configured and adapted to:
receive a list from each node of the plurality of nodes that request to be part of said distribution of electrical energy within the energy network, termed partner nodes (200), wherein said list includes a predicted energy generation, storage and demand over a specified period of time, an actual price for supplying and/or demanding electrical energy, including prices to traverse an intermediary node between two partner nodes (200), and electrical energy losses that would be incurred in transferring electrical energy to or from each partner node (200), including losses to traverse an intermediary node between two partner nodes; and
calculate the distribution of the electrical energy using the information of said lists and a predefined function, wherein said predefined function includes maximizing a ratio of electrical energy distributed to cost, allocating energy resources in a balanced manner based on needs of different partner nodes (200) or a combination of cost and equity,
wherein the partner nodes (200) being directly or indirectly connected with the other partner nodes (200).

14. The system of claim 13, wherein:
the electrical energy generation elements at least include one of solar panels, diesel generation systems, geothermal systems or a human-powered crank generator;
the energy storage elements at least include one of batteries, capacitors and elevated weight including water; and
the electrical energy loads at least include one of lighting systems and appliances including refrigerators and heating equipment.

15. A computer program product tangibly embodied in a non-transitory machine-readable storage medium including code instructions that, when executed by at least one processor of a computer system implements the method of claim 1.
